# EUROPEAN PATENT APPLICATION

(11) **EP 2 940 942 A1**
(43) Date of publication of application: **04.11.2015**
(21) Application number: 15164647.8
(22) Date of filing: 22.04.2015
(51) Int. Cl.: H04L 12/58

(54) **METHODS AND SYSTEMS FOR COMMUNICATION MANAGEMENT WITH ORGANIZED INFORMATION PRESENTATION**

(30) Priority: 30.04.2014 TW 103115469
(71) Applicant: Hooloop Corporation, Taipei City 115 (TW)
(72) Inventor: Wang, John C., 115 Taipei City (TW); Yu, Doris, 115 Taipei City (TW)
(74) Representative: Karakatsanis, Georgios

(57) **Abstract**

Methods and systems (100) for communication management with organized information presentation are provided. A first user device (136) transmits an information container with a first state (ICA1) to a second user device (138) via a network (120). The second user device (138) edits the content of the information container, thus changing the state of the information container from the first state to a second state. The second user device (138) transmits the information container with the second state (ICA2) to the first user device (136) via the network (120). Respective users can communally change the state of an information container as a means of communication, such that ad hoc communications are structured into an organized information presentation through the use of the information container.

## Description

### BACKGROUND

### Technical Field

The disclosure relates generally to methods and systems for communication management, and, more particularly to methods and systems for communication management with organized information presentation.

### Description of the Related Art

Recently, portable devices, such as smart phones or notebooks, have become more and more technically advanced and multifunctional. For example, a portable device may have network connectivity capabilities. Users can use their portable devices to connect to networks anytime and anywhere. Due to increased convenience and expanded functionalities of the devices, these devices have become necessities of life.

As a result of the popularity of applications for network communication in smartphones, communicating with friends online via smartphone applications has become a prevalent interaction method. Generally, users can input a text message or record a voice message, and send the text message or the voice message to a specific friend or members of a group. The specific friend or the group members can read the text message or the voice message, immediately or at their leisure.

Generally, a common consensus will result after repeated communications between users. For example, when a user wants to invite friends to dine together, communications for discussing the restaurant and time will be repeated until a final and common decision is concluded. In addition to the inefficiency of repeated communications, users also need to analyze and gather statistics of respective users' opinions resulting in annoyed users and stressed relationships.

### Summary

Methods and systems for communication management with organized information presentation are provided, wherein respective users can change the state of an information container during the course of communications via electronic devices, thereby transforming minute and complicated communications into organized information presentation by using the information container. In addition, the state changes of the information container can be recorded, and subsequent management, such as version tracking can be further performed.

In an embodiment of a method for communication management with organized information presentation, a first user device transmits an information container with a first state to a second user device via a network. The second user device edits the content of the information container, thus changing the state of the information container from the first state to a second state. The second user device transmits the information container with the second state to the first user device via the network.

In some embodiments, a display unit of the first user device and/or the second user device displays the information container with the first state. After the second user device changes the state of the information container from the first state to the second state, the display unit of the first user device and/or the second user device displays the information container with the second state. In some embodiments, the information container with the first state and the information container with the second state are presented in different display types, such that the information container with the second state is identified as the newest state of the information container, and the information container with the first state cannot be edited. In some embodiments, a selection corresponding to the information container with the first state or the information container with the second state is received via the first user device or the second user device. In response to the selection, a filtering process is performed accordingly, such that the information containers with the same identification data in different states are displayed in the display unit. In some embodiments, an interface is provided to display the sequential state changes of the information container.

In some embodiments, the second user device can perform an operation to the information container, so that the information container generates an editing interface, and the second user device edits the content of the information container via the editing interface.

In some embodiments, the information container comprises at least one data item, and the second user device edits the content of the information container by selecting the data item.

In an embodiment of a method for communication management with organized information presentation, a first user device transmits an information container with a first state to a second user device via a network. The first user device edits the content of the information container, thus changing the state of the information container from the first state to a second state. Then, the first user device transmits the information container with the second state to the second user device via the network.

In an embodiment of a method for communication management with organized information presentation, an information container with a first state is received from a first user device via a network, and the information container with the first state is transmitted to a second user device via the network. Then, the information container with a second state is received from the second user device via the network, wherein the second user device edits the content of the information container, thus changing the state of the information container from the first state to the second state. The information container with the second state is transmitted to the first user device via the network.

An embodiment of a system for communication management with organized information presentation comprises a network connecting unit and a processing unit. The processing unit receives an information container with a first state from a first user device via the network connecting unit and a network, and transmits the information container with the first state to a second user device via the network connecting unit and the network. The processing unit receives the information container with a second state from the second user device via the network connecting unit and the network, wherein the second user device edits the content of the information container, thus changing the state of the information container from the first state to the second state. The processing unit transmits the information container with the second state to the first user device via the network connecting unit and the network.

In an embodiment of a method for communication management with organized information presentation, an information container with a first state is received from a first user device via a network, and the information container with the first state is transmitted to a second user device via the network. Then, the information container with a second state is received from the first user device via the network, wherein the first user device edits the content of the information container, thus changing the state of the information container from the first state to the second state. The information container with the second state is transmitted to the second user device via the network.

An embodiment of a system for communication management with organized information presentation comprises a network connecting unit and a processing unit. The processing unit receives an information container with a first state from a first user device via the network connecting unit and a network, and transmits the information container with the first state to a second user device via the network connecting unit and the network. The processing unit receives the information container with a second state from the first user device via the network connecting unit and the network, wherein the first user device edits the content of the information container, thus changing the state of the information container from the first state to the second state. The processing unit transmits the information container with the second state to the second user device via the network connecting unit and the network.

Methods for communication management with organized information presentation may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed descriptions with references to the accompanying drawings, wherein:
Fig. 1 is a schematic diagram illustrating an embodiment of a system for communication management with organized information presentation of the invention;
Fig. 2 is a schematic diagram illustrating an embodiment of an electronic device of the invention;
Fig. 3 is a flowchart of an embodiment of a method for communication management with organized information presentation of the invention;
Fig. 4 is a flowchart of another embodiment of a method for communication management with organized information presentation of the invention;
Figs. 5A and 5B are schematic diagrams illustrating an example of an editing interface for the information container of the invention;
Fig. 6 is a flowchart of another embodiment of a method for communication management with organized information presentation of the invention;
Figs. 7A, 7B and 7C are schematic diagrams illustrating an example of communication management with organized information presentation of the invention;
Figs. 8A and 8B are schematic diagrams illustrating an example of a filtering process for the information container of the invention;
Fig. 9 is a flowchart of another embodiment of a method for communication management with organized information presentation of the invention;
Fig. 10 is a flowchart of another embodiment of a method for communication management with organized information presentation of the invention;
Figs. 11A and 11B are schematic diagrams illustrating an example of communication management with organized information presentation of the invention;
Fig. 12A is a schematic diagram illustrating an example of an interface for displaying respective information containers; and
Fig. 12B is a schematic diagram illustrating an example of an interface for displaying the state changes of an information container.

### DETAILED DESCRIPTION OF THE INVENTION

Methods and systems for communication management with organized information presentation are provided.

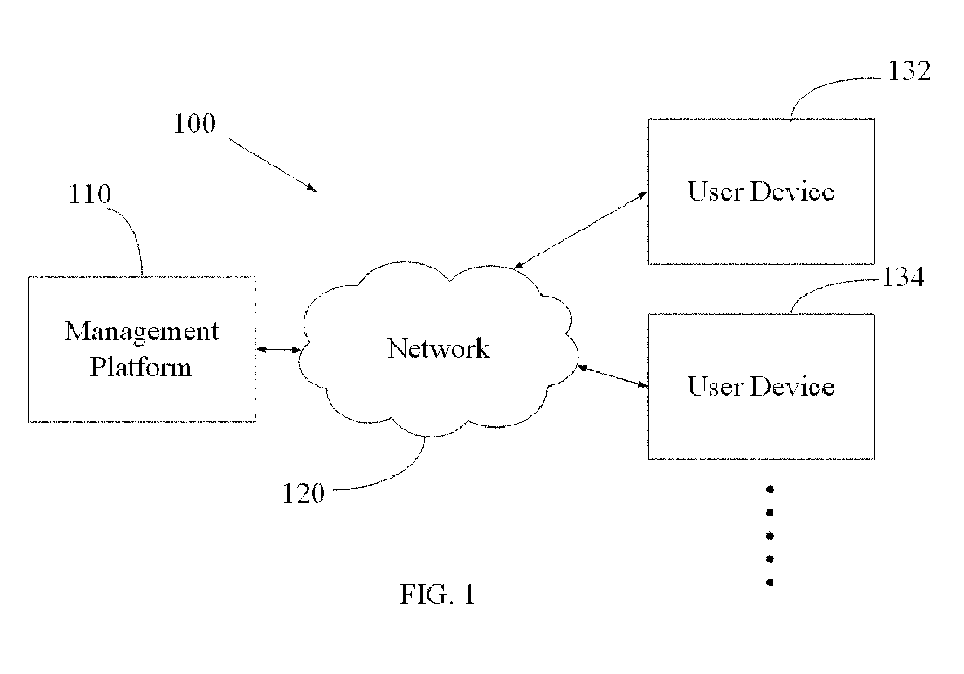

Fig. 1 is a schematic diagram illustrating an embodiment of a system for communication management with organized information presentation of the invention. As shown in Fig. 1, the system for communication management with organized information presentation 100 can comprise a management platform 110 and at least one user device (132 and 134). The user device may be any electronic device having network connectivity capabilities, such as a computer, or a portable device, such as a mobile phone, a smart phone, a PDA (Personal Digital Assistant), a GPS (Global Positioning System), or a notebook. In some embodiments, the user device can connect to the management platform 110 via a network 120, such as a wired network, a telecommunication network, and/or a wireless network such as Bluetooth or Wi-Fi network. The management platform 110 can provide a service corresponding to at least one application, and the respective user device can install the application. In some embodiments, the application is a network communication application. Users can communicate with each other via the management platform 110 by using their user devices.

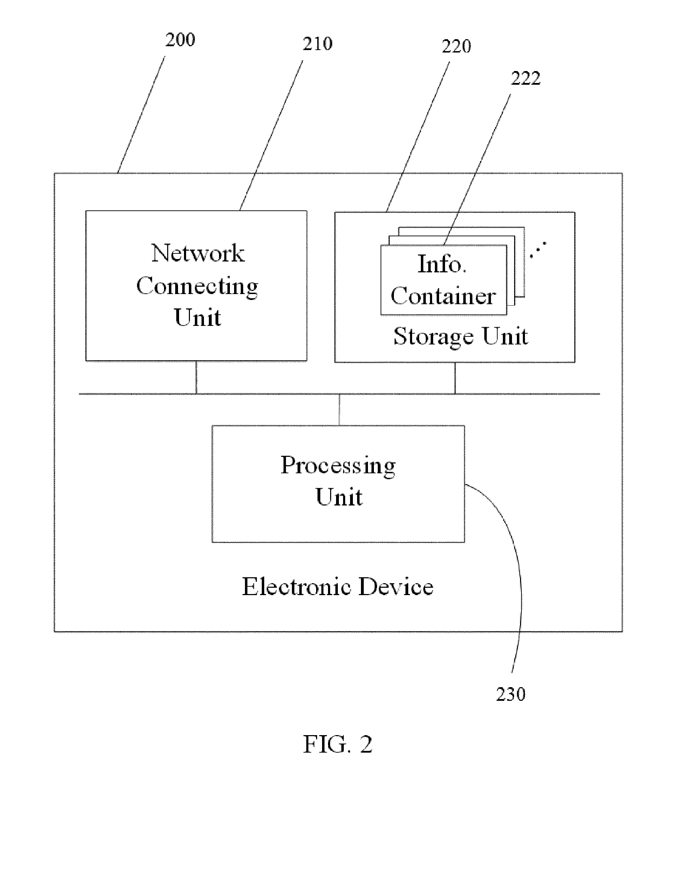

Fig. 2 is a schematic diagram illustrating an embodiment of an electronic device of the invention. It is understood that, the electronic device may be the management platform or the user device in Fig. 1. As shown in Fig. 2, the electronic device 200 comprises a network connecting unit 210, a storage unit 220, and a processing unit 230. The network connecting unit 210 can connect to a network, such as a wired network, a telecommunication network, and/or a wireless network such as Bluetooth or Wi-Fi network. The electronic device 200 can have network connectivity capabilities by using the network connecting unit 210. The storage unit 220 comprises at least one information container 222. It is understood that, in some embodiments, the information container 222 can correspond to a specific task. In some embodiments, the information container can have identification data. In some embodiments, the identification data corresponding to the information container can be generated in advance, or generated when the information container is used. The identification data can be used to associate the information containers with the same identification data in different states. In some embodiments, each information container may have a specific format having at least one data field. In some embodiments, the data field can optionally provide a data item for users to select. Additionally, in some embodiments, each information container can have an editing interface. Once an operation, such as a selection corresponding to the information container is received, the editing interface is displayed, and used to edit the content of the information container. In some embodiments, the storage unit 220 can store related data, such as text, image and/or voice messages corresponding to respective users. The processing unit 230 can control related operations of hardware and software in the electronic device, and perform the methods for communication management with organized information presentation of the present invention, which will be discussed later.

It is understood that, in some embodiments, the electronic device 200 can comprise a display unit (not shown in Fig. 2), which can display related information, such as images, interfaces, and/or data. In some embodiments, the display unit can display a representative icon corresponding to the information container in a user interface.

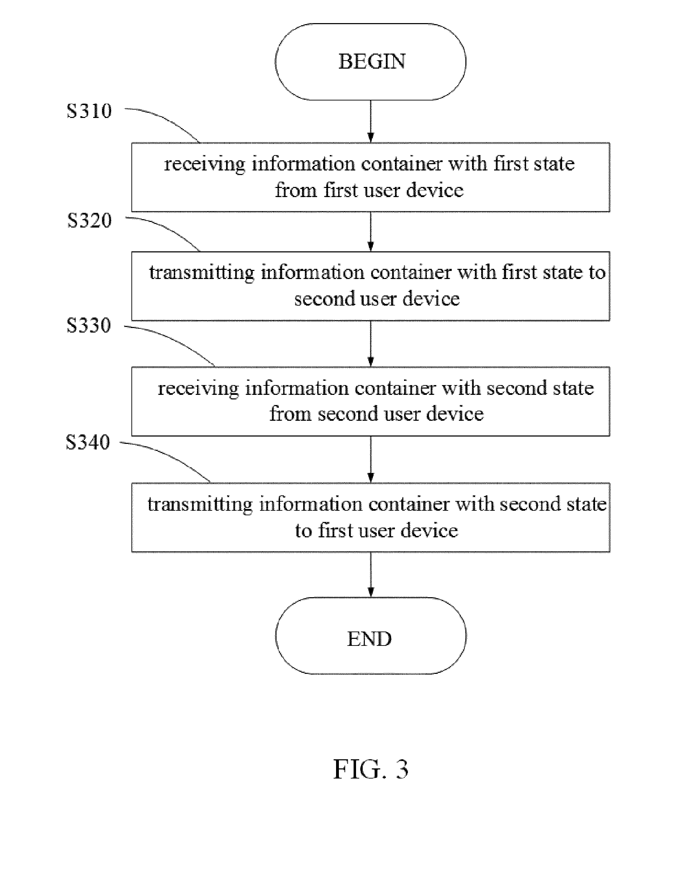

Fig. 3 is a flowchart of an embodiment of a method for communication management with organized information presentation of the invention. The method for communication management with organized information presentation can be used in an electronic device, such as the management platform or the user device.

In step S310, an information container with a first state is received from a first user device via a network, such as a wired network, a telecommunication network, and/or a wireless network, and in step S320, the information container with the first state is transmitted to a second user device via the network. It is understood that, in some embodiments, the second user device can edit the content of the information container, thus changing the state of the information container from the first state to a second state. In some embodiments, the second user device can perform an operation to the information container, so that the information container generates an editing interface, and the second user device edits the content of the information container via the editing interface. As described, the information container can have at least one data item. In some embodiments, the second user device can edit the content of the information container by selecting one of the at least one data item. Additionally, in some embodiments, the information container can correspond to a specific task, and the content of the information container can comprise an execution status corresponding to the task. Similarly, in some embodiments, the execution status can be selected from the data item of the information container. It is understood that, in some embodiments, the content of the data item can be determined by the user device. It is noted that, after the information container is edited, the second user device can transmit the edited information container to the electronic device. In step S330, the information container with the second state is received from the second user device via a network, such as a wired network, a telecommunication network, and/or a wireless network, and in step S340, the information container with the second state is transmitted to the first user device via the network.

It is understood that, in some embodiments, the electronic device can perform a management process, such as a statistics process to the content of the information container. As described, in some embodiments, the information container may have a specific format having at least one data field. In some embodiments, the statistics process can be performed based on the at least one data field. In some embodiments, the management process can display related attached information. For example, the execution status corresponding to a task can be shown on the information container.

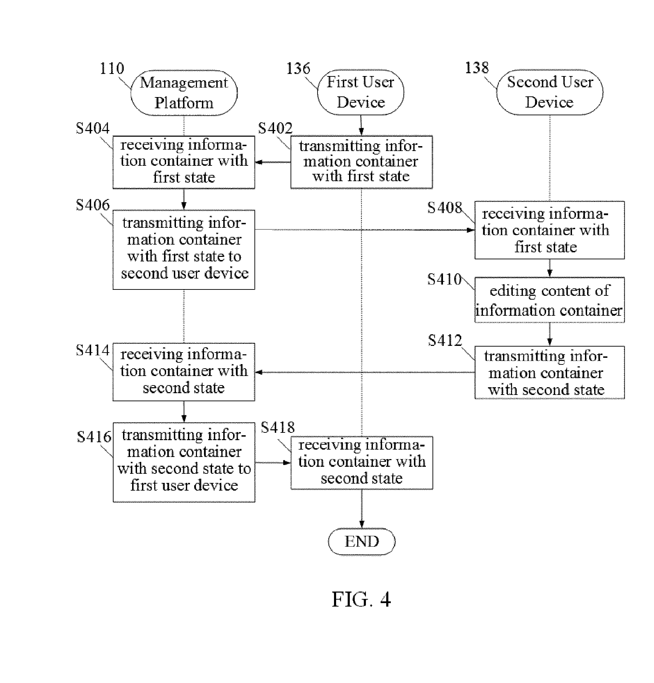

Fig. 4 is a flowchart of another embodiment of a method for communication management with organized information presentation of the invention.

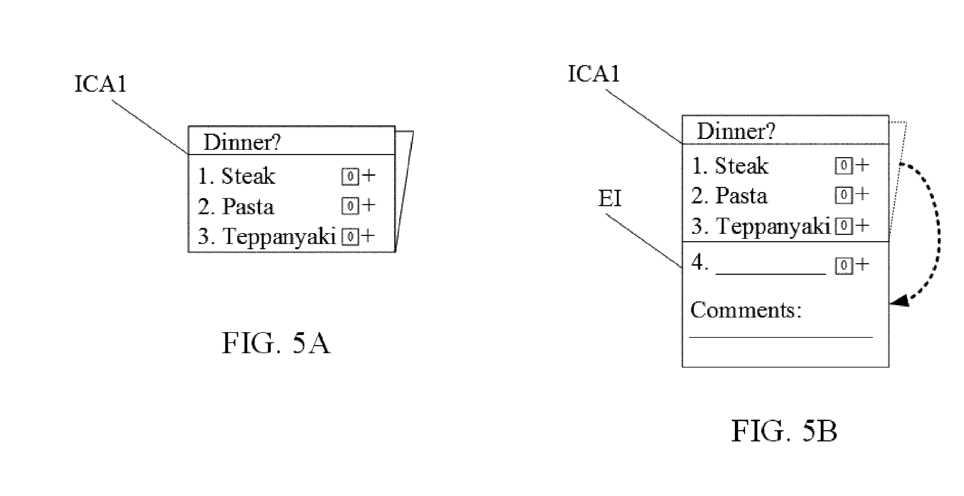

In step S402, a first user device 136 transmits an information container with a first state to a management platform 110 via a network. It is understood that, in some embodiments, the first user device 136 can select one of candidate information containers provided by the management platform 110. It is noted that, in some embodiments, the information container may have predefined content, or the content can be determined by the first user device 136. The first user device 136 can designate at least one user device, such as a second user device 138 to receive the information container. In step S404, the management platform 110 receives the information container with the first state from the first user device 136, and in step S406, transmits the information container with the first state to the second user device 138 via the network. In step S408, the second user device 138 receives the information container from the management platform 110. It is noted that, the management platform 110 can generate identification data for the information container. The identification data can be used to associate the information containers with the same identification data in different states. The association for information containers will be discussed later. After the information container is received, in step S410, the second user device 138 edits the content of the information container, thus changing the state of the information container from the first state to a second state. Similarly, in some embodiments, the second user device 138 can perform an operation, such as a selection to the information container, so that the information container generates an editing interface, and the second user device 138 can edit the content of the information container via the editing interface. For example, the second user device can receive an information container ICA1 with a first state, as shown in Fig. 5A. After the second user device selects the information container, an editing interface EI is unfolded, as shown in Fig. 5B. The second user device can edit the content of the information container by using the editing interface EI. It is noted that, the above information container and the editing interface are only examples of the present application, and the present invention is not limited thereto. As described, the information container can have at least one data item. In some embodiments, the second user device can edit the content of the information container by selecting one of the at least one data item. Additionally, in some embodiments, the information container can correspond to a specific task, and the content of the information container can comprise an execution status corresponding to the task. Similarly, in some embodiments, the execution status can be selected from the data item of the information container. After the information container is edited, in step S412, the second user device 138 transmits the information container with the second state to the management platform 110. In step S414, the management platform 110 receives the information container with the second state from the second user device 138, and in step S416, transmits the information container with the second state to the first user device 136 via the network. In step S418, the first user device 136 receives the information container with the second state from the management platform 110.

It is understood that, in some embodiments, the management platform 110 can perform a management process, such as a statistical analysis process to the content of the information container. In an example of group purchase, the information container may have related content, such as the target, specification, and/or quantity of the group purchase. In some cases, the content of the group purchase can be formatted as data items for selection. It is understood that, in some embodiments, the content in the data items can be determined by the first user device 136. The management platform 110 can gather statistics for the target, specification, and/or quantity, and transmit the result of the management process to the first user device 136.

As described, the display unit can display a representative icon corresponding to the information container in a user interface. In some embodiments, the information containers in different states can be displayed via a display unit of the first user device and/or the second user device. It is noted that, when the state of the information container changes, the information container will be automatically reproduced and displayed, in which the reproduced information container will have the newest state.

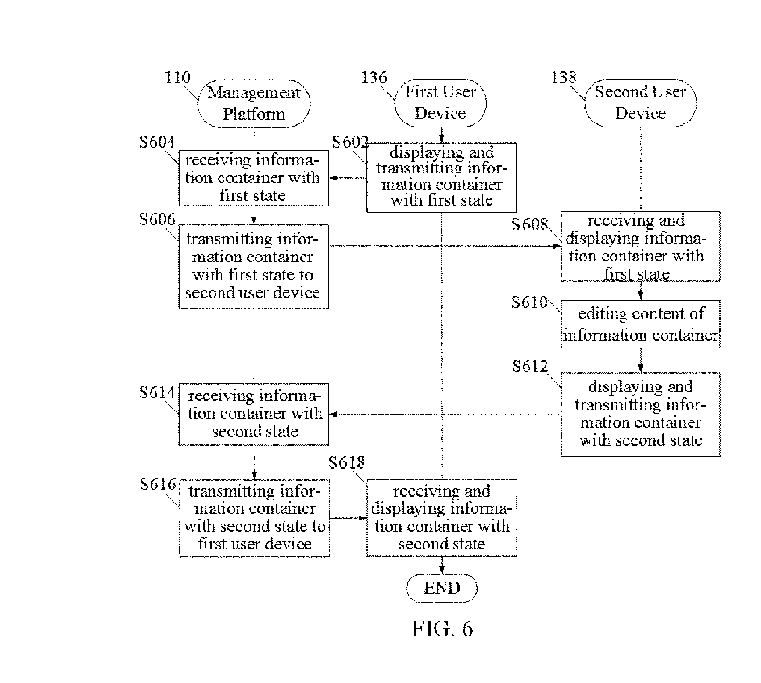

Fig. 6 is a flowchart of another embodiment of a method for communication management with organized information presentation of the invention.

In step S602, a first user device 136 displays an information container with a first state, and transmits the information container with the first state to a management platform 110 via a network. Similarly, in some embodiments, the first user device 136 can select one of candidate information containers provided by the management platform 110. It is noted that, in some embodiments, the information container may have predefined content, or the content can be determined by the first user device 136. The first user device 136 can designate at least one user device, such as a second user device 138 to receive the information container. In step S604, the management platform 110 receives the information container with the first state from the first user device 136, and in step S606, transmits the information container with the first state to the second user device 138 via the network. In step S608, the second user device 138 receives the information container from the management platform 110, and displays the information container with the first state. Similarly, the management platform 110 can generate identification data for the information container. The identification data can be used to associate the information containers with the same identification data in different states. The association for information containers will be discussed later. After the information container is received, in step S610, the second user device 138 edits the content of the information container, thus changing the state of the information container from the first state to a second state. Similarly, in some embodiments, the second user device 138 can perform an operation, such as a selection of the information container, so that the information container generates an editing interface, and the second user device 138 can edit the content of the information container via the editing interface. As described, the information container can have at least one data item. In some embodiments, the second user device can edit the content of the information container by selecting one of the at least one data item. Additionally, in some embodiments, the information container can correspond to a specific task, and the content of the information container can comprise an execution status corresponding to the task. Similarly, in some embodiments, the execution status can be selected from the data item of the information container. After the information container is edited, in step S612, the second user device 138 displays the information container with the second state, and transmits the information container with the second state to the management platform 110. In step S614, the management platform 110 receives the information container with the second state from the second user device 138, and in step S616, transmits the information container with the second state to the first user device 136 via the network. In step S618, the first user device 136 receives the information container with the second state from the management platform 110, and displays the information container with the second state.

It is understood that, in some embodiments, the information containers in different states can be presented in different display types, such that the information container with the newest state can be identified by users. In the embodiment of Fig. 6, the information container with the first state and the information container with the second state are presented in different display types, such that the information container with the second state is identified as the newest state of the information container. It is noted that, the information container with the first state cannot be edited. In other words, only the information container with the newest state can be edited.

It is understood that, in the embodiments of Figs. 4 and 6, the communications between the first user device 136 and the second user device 138 are performed via the management platform. In some embodiments, however, the communications can be directly performed between the first user device 136 and the second user device 138.

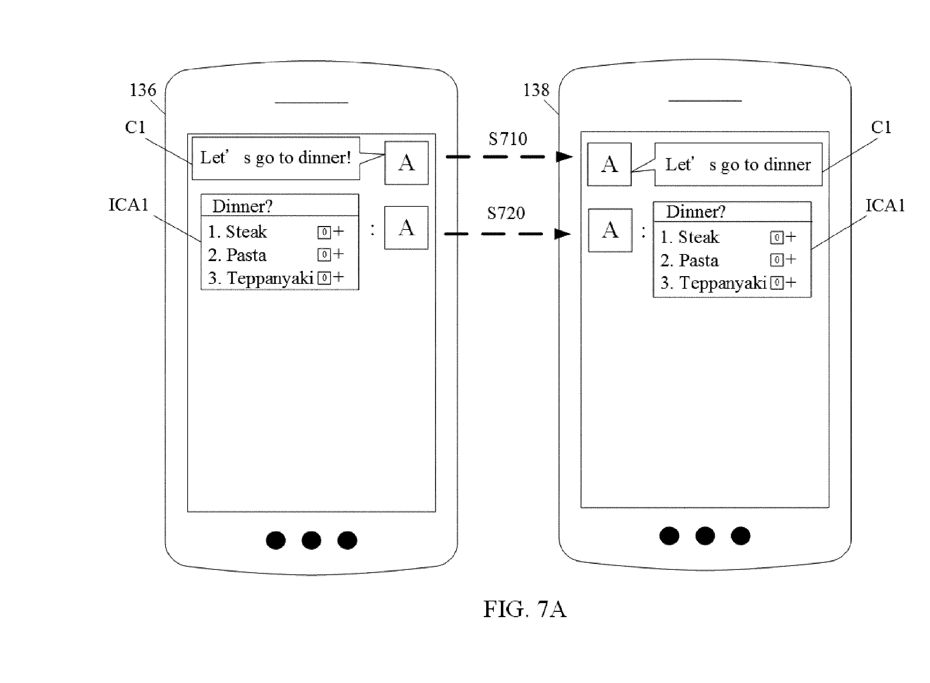

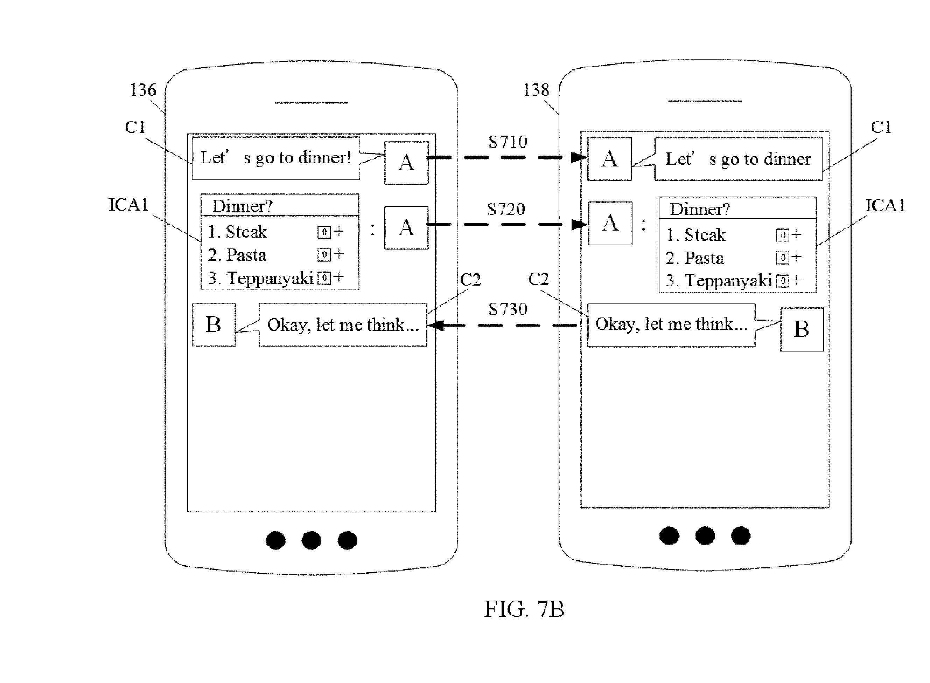

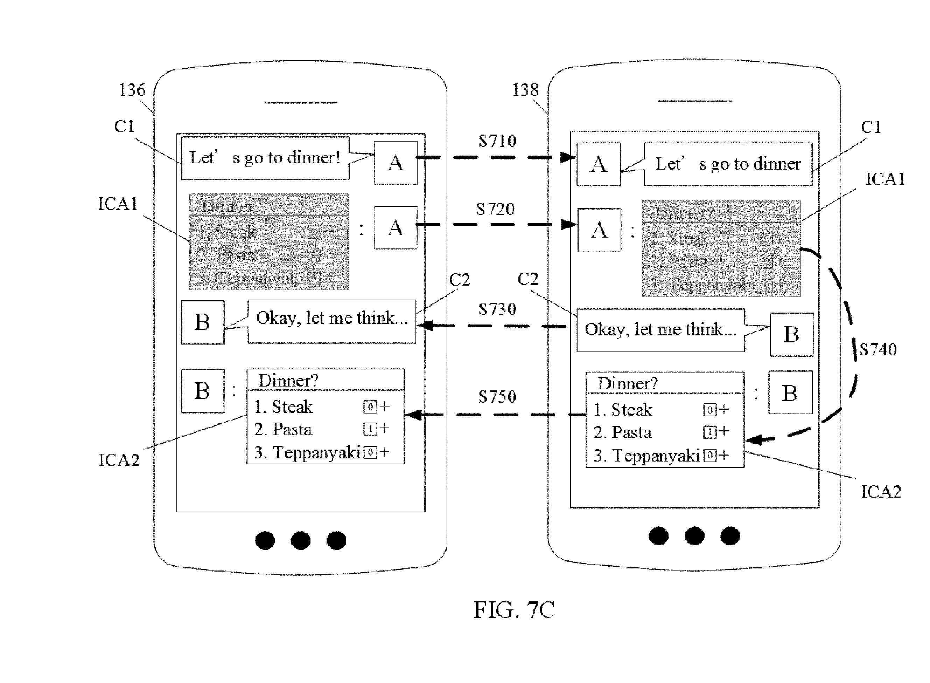

Figs. 7A, 7B and 7C are schematic diagrams illustrating an example of communication management with organized information presentation of the invention. In the example, a user A corresponding to the first user device 136 can communicate with a user B corresponding to the second user device 138 by using an information container.

First, the first user device 136 generates a message "Let's go to dinner!" C1. The message C1 is displayed in the display unit of the first user device 136, and transmitted to the second user device 138 (step S710). The second user device 138 displays the received message C1 in the display unit, as shown in Fig. 7A. Then, the first user device 136 generates and displays an information container ICA1 with a first state, and transmits the information container ICA1 with the first state to the second user device 138 (step S720). After the information container is received, the second user device 138 displays the information container ICA1 with the first state. In the example, the information container has a topic of "Dinner?", and has data items of "1. Steak", "2. Pasta", and "3. Teppanyaki". After the information container is received from the first user device 136, the second user device 138 generates a message "Okay, let me think..." C2. The message C2 is displayed in the display unit of the second user device 138, and transmitted to the first user device 136 (step S730) and displayed as shown in Fig. 7B. Then, the second user device 138 edits the information container ICA1 with the first state. It is noted that, the user B can directly select '+' of the respective data item to edit the content of the information container. In some cases, the user B can select the information container to edit the content of the information container via the editing interface EI shown in Fig. 5B. As described, after the content of the information container is edited/changed, the information container will be automatically reproduced and displayed, so that the reproduced information container will have the newest state. In the example, after the second user device 138 changes the state of the information container ICA1 from the first state to the second state, the information container ICA2 with the second state will be automatically generated and displayed (step S740), and the information container ICA2 with the second state is transmitted to the first user device 136 (step S750) and displayed as shown in Fig. 7C. Consequently, the communications between user A and user B can be presented in an organized format by using the information container.

It is noted that, the information container ICA1 and the information container ICA2 have different display types. Users can identify that the information container ICA2 has the newest state according to the corresponding display type. At this time, the information container ICA1 cannot be edited.

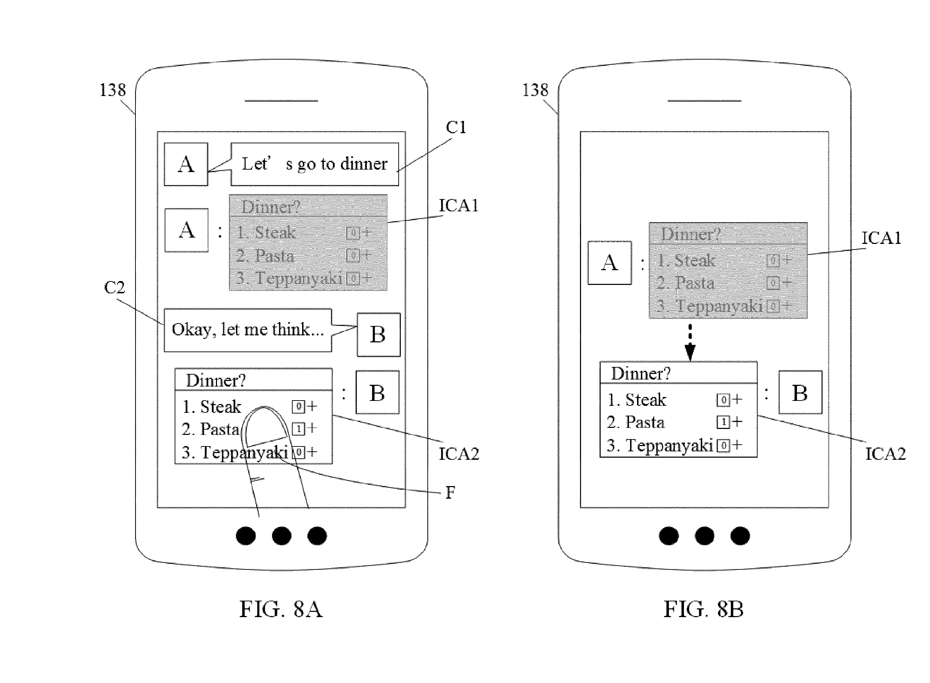

As described, the information containers with the same identification data in different states can be associated. In some embodiments, a selection corresponding to a specific information container can be received in the respective user device. In response to the selection, a filtering process is performed accordingly, such that the information containers with the same identification data in different states can be displayed in the display unit of the user device. For example, the display unit of the second user device 138 can display the communications between the second user device 138 and the first user device 136, as shown in Fig. 8A. The user B can use a finger F to select an item, for example by long-pressing on an icon corresponding to the information container ICA2, to trigger a filtering process. At this time, the information containers with the same identification data in different states will be displayed in the display unit, and the information containers with other states will be removed, as shown in Fig. 8B. In the example, the message C1 generated by the first user A, and the message C2 generated by the user B will no longer be displayed in the display unit.

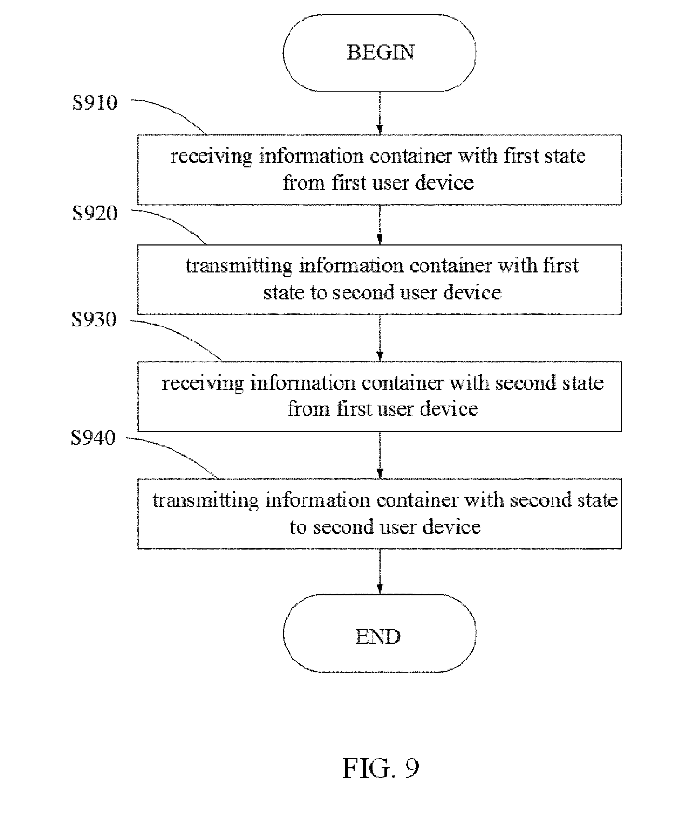

Fig. 9 is a flowchart of another embodiment of a method for communication management with organized information presentation of the invention. The method for communication management with organized information presentation can be used in an electronic device, such as the management platform or the user device.

In step S910, an information container with a first state is received from a first user device via a network, such as a wired network, a telecommunication network, and/or a wireless network, and in step S920, the information container with the first state is transmitted to a second user device via the network. It is understood that, in some embodiments, the first user device can edit the content of the information container, thus changing the state of the information container from the first state to a second state. In some embodiments, the first user device can perform an operation to the information container, so that the information container generates an editing interface, and the first user device edits the content of the information container via the editing interface. As described, the information container can have at least one data item. In some embodiments, the first user device can edit the content of the information container by selecting one of the at least one data item. Additionally, in some embodiments, the information container can correspond to a specific task, and the content of the information container can comprise an execution status corresponding to the task. Similarly, in some embodiments, the execution status can be selected from the data item of the information container. It is understood that, in some embodiments, the content of the data item can be determined by the user device. It is noted that, after the information container is edited, the first user device can transmit the edited information container to the electronic device. In step S930, the information container with the second state is received from the first user device via a network, such as a wired network, a telecommunication network, and/or a wireless network, and in step S940, the information container with the second state is transmitted to the second user device via the network.

It is understood that, in some embodiments, the electronic device can perform a management process, such as a statistics process to the content of the information container. As described, in some embodiments, the information container may have a specific format having at least one data field. In some embodiments, the statistics process can be performed based on at least one data field. In some embodiments, the management process can display related attached information. For example, the execution status corresponding to a task can be shown on the information container.

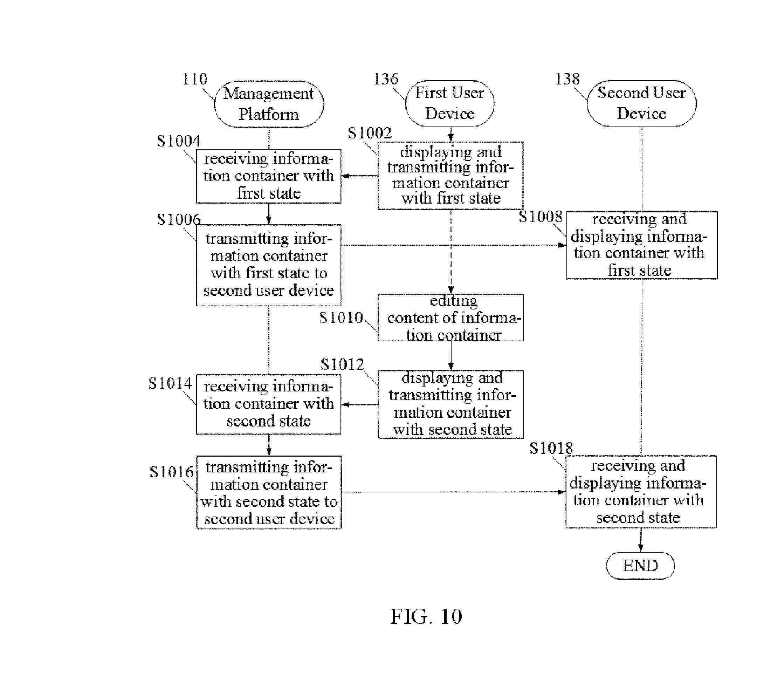

Fig. 10 is a flowchart of another embodiment of a method for communication management with organized information presentation of the invention.

In step S1002, a first user device 136 displays an information container with a first state, and transmits the information container with the first state to a management platform 110 via a network. Similarly, in some embodiments, the first user device 136 can select one of candidate information containers provided by the management platform 110. It is noted that, in some embodiments, the information container may have predefined content, or the content can be determined by the first user device 136. The first user device 136 can designate at least one user device, such as a second user device 138 to receive the information container. In step S1004, the management platform 110 receives the information container with the first state from the first user device 136, and in step S 1006, transmits the information container with the first state to the second user device 138 via the network. In step S61008, the second user device 138 receives the information container from the management platform 110, and displays the information container with the first state. Similarly, the management platform 110 can generate identification data for the information container. The identification data can be used to associate the information containers with the same identification data in different states. Then, in step S 1010, the first user device 136 edits the content of the information container, thus changing the state of the information container from the first state to a second state. Similarly, in some embodiments, the first user device 136 can perform an operation, such as a selection of the information container, so that the information container generates an editing interface, and the first user device 136 can edit the content of the information container via the editing interface. As described, the information container can have at least one data item. In some embodiments, the first user device 136 can edit the content of the information container by selecting one of the at least one data item. Additionally, in some embodiments, the information container can correspond to a specific task, and the content of the information container can comprise an execution status corresponding to the task. Similarly, in some embodiments, the execution status can be selected from the data item of the information container. After the information container is edited, in step S1012, the first user device 136 displays the information container with the second state, and transmits the information container with the second state to the management platform 110. In step S1014, the management platform 110 receives the information container with the second state from the first user device 136, and in step S1016, transmits the information container with the second state to the second user device 138 via the network. In step S1018, the second user device 138 receives the information container with the second state from the management platform 110, and displays the information container with the second state.

It is understood that, in some embodiments, the information containers in different states can be presented in different display types, such that the information container with the newest state can be identified by users. In the embodiment of Fig. 10, the information container with the first state and the information container with the second state are presented in different display types, such that the information container with the second state is identified as the newest state of the information container. It is noted that, the information container with the first state cannot be edited. In other words, only the information container with the newest state can be edited.

It is understood that, in the embodiment of Fig. 10, the communications between the first user device 136 and the second user device 138 are performed via the management platform. In some embodiments, however, the communications can be directly performed between the first user device 136 and the second user device 138.

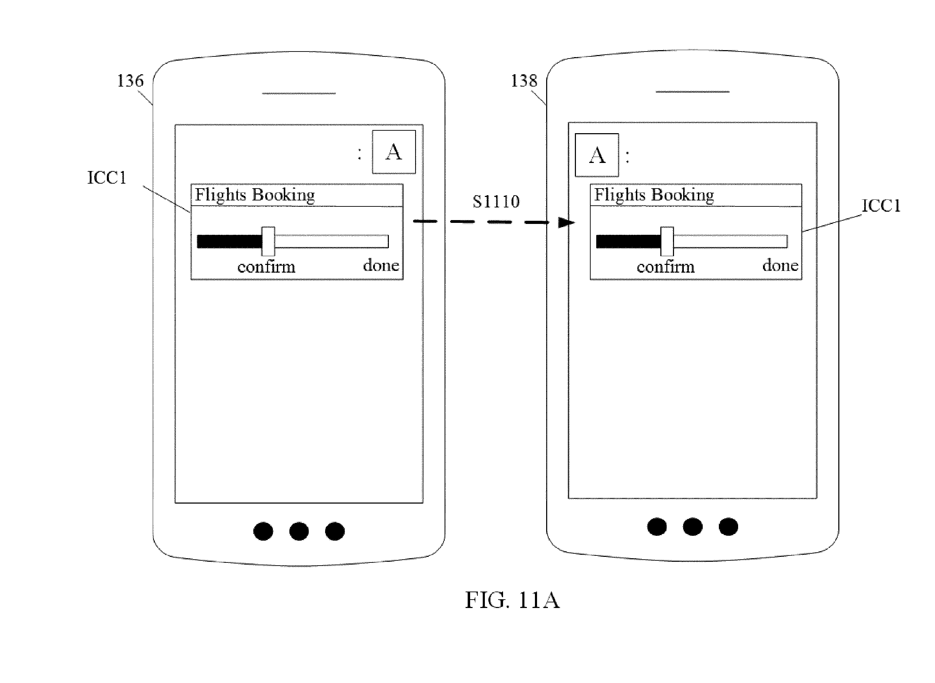

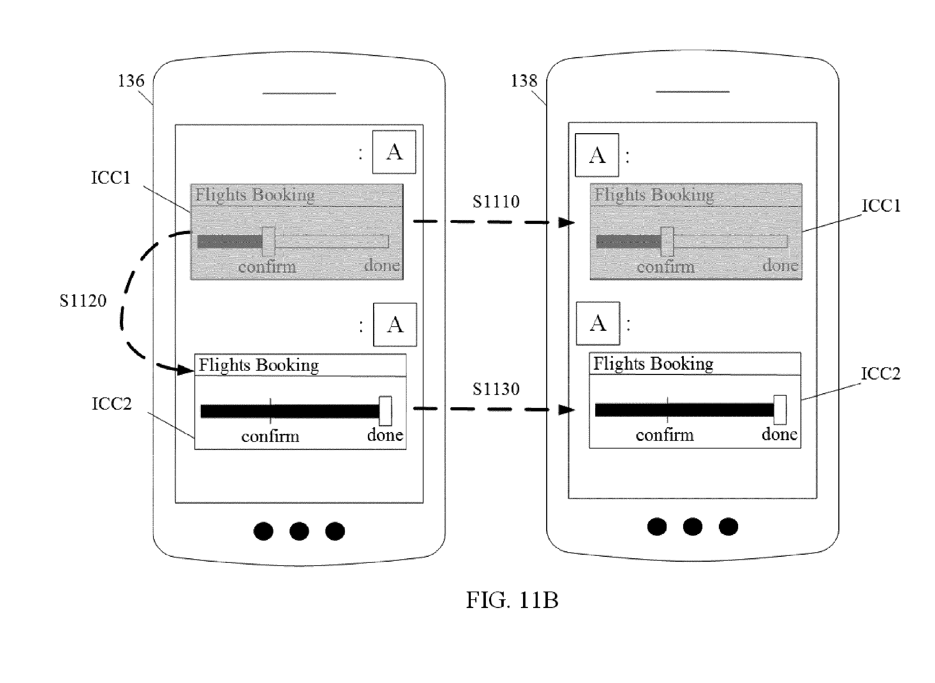

Figs. 11A and 11B are schematic diagrams illustrating an example of communication management with organized information presentation of the invention. In the example, a user A corresponding to the first user device 136 can communicate with a user B corresponding to the second user device 138 by using an information container.

First, the first user device 136 generates and displays an information container ICC1 with a first state, and transmits the information container ICC1 with the first state to the second user device 138 (step S1110). After the information container is received, the second user device 138 displays the information container ICC1 with the first state, as shown in Fig. 11A. In the example, the information container ICC1 has a topic of "Flights Booking", which is generated by a secretary (user A). The information container ICC1 corresponds to a task requested by a boss (user B), and the secretary can adjust the execution status on the information container ICC1, for example, dragging the scroll bar corresponding to the execution status, to notify the boss of the progress of the task. Then, the first user device 136 edits the information container ICC1 with the first state. It is noted that, the user A can edit the content of the information container by directly dragging the scroll bar to adjust the execution status on the information container ICC1. As described, after the content of the information container is edited/changed, the information container will be automatically reproduced and displayed, in which the reproduced information container will have the newest state. In the example, the execution status corresponding to the task "Flights Booking" can be changed from "confirm" to "done". After the first user device 136 changes the state of the information container ICC1 from the first state to the second state, the information container ICC2 with the second state will be automatically generated and displayed (step S1120), and the information container ICC2 with the second state is transmitted to the second user device 138 (step S1130) and displayed as shown in Fig. 11B. Consequently, the communications between the user A and the user B can be presented in an organized format by using the information container.

It is noted that, the information container ICC1 and the information container ICC2 have different display types. Users can identify that the information container ICC2 has the newest state according to the corresponding display type. At this time, the information container ICC1 cannot be edited.

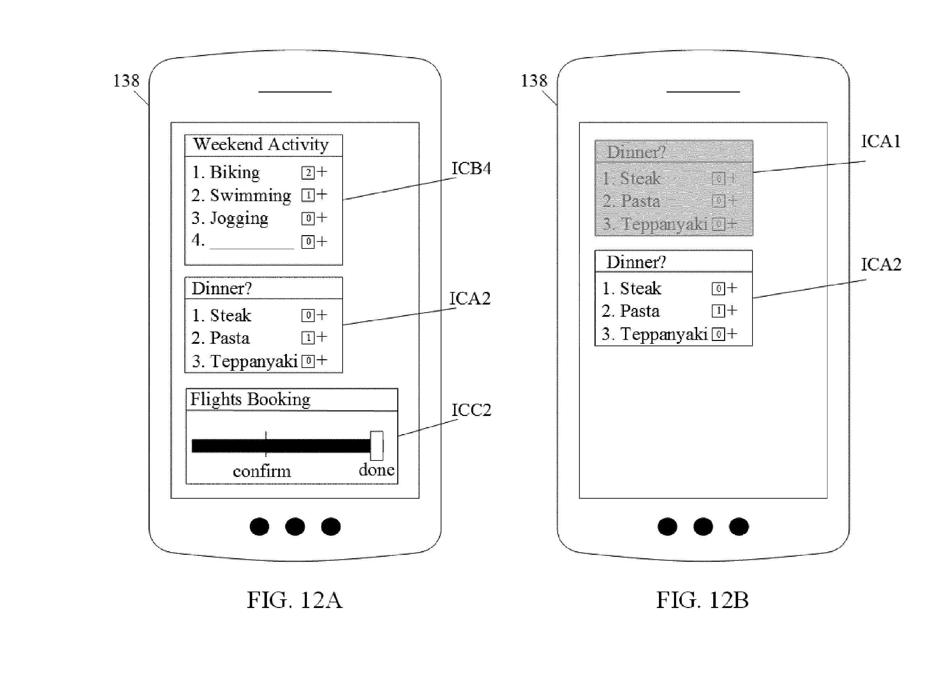

Additionally, in some embodiments, the user device can provide an interface for displaying a part or all of the information containers in the user device. For example, the display unit of the second user device 138 can display all of the information containers in the second user device 138 via an interface, as shown in Fig. 12A. In the example, the information container ICB4 with a topic of "Weekend Activity", the information container ICA2 with a topic of "Dinner?", and the information container ICC2 with a topic of "Flights Booking" are in the second user device 138. It is noted that, the newest state of the respective information container will be displayed in the Fig. 12A. In some embodiments, when a specific information container is selected, the sequential state changes of the specific information container will be displayed. For example, when the information container ICA2 is selected, the different states of the selected information container ICA2 will be sequentially displayed in the display unit of the second user device 138 via an interface, as shown in Fig. 12B.

Therefore, the methods and systems for communication management with organized information presentation of the present invention can help efficiently facilitate the communications between users by using an information container, thereby increasing the speed and convenience of communication. Ad hoc communications are structured into organized information presentations through the use of the information container. Additionally, the state changes of the information container can be recorded, and subsequent management, such as version tracking can be further performed.

Methods for communication management with organized information presentation may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for communication management with organized information presentation, comprising:
transmitting an information container with a first state (ICA1) to a second user device (138) via a network (120) by a first user device (136);
editing the content of the information container by the second user device (138), thus changing the state of the information container from the first state to a second state; and
transmitting the information container with the second state (ICA2) to the first user device (136) via the network (120) by the second user device (138).

2. The method of claim 1, further comprising:
displaying the information container with the first state (ICA1) via a display unit of the second user device (138); and
displaying the information container with the second state (ICA2) via the display unit of the second user device (138) after the state of the information container is changed from the first state to the second state by the second user device (138).

3. The method of claim 2, the information container with the first state (ICA1) and the information container with the second state (ICA2) are presented in different display types, such that the information container with the second state (ICA2) is identified as the newest state of the information container, and the information container with the first state (ICA1) cannot be edited.

4. The method of claim 2 or 3, further comprising:
receiving a selection corresponding to the information container with the first state (ICA1) or the information container with the second state (ICA2) via the second user device (138); and
in response to the selection, performing a filtering process, such that the information containers with the same identification data in different states are displayed in the display unit.

5. The method of claim 2, 3 or 4, further comprising providing an interface for displaying the sequential state changes of the information container.

6. A method for communication management with organized information presentation, comprising:
transmitting an information container with a first state (ICA1) to a second user device (138) via a network (120) by a first user device (136);
editing the content of the information container by the first user device (136), thus changing the state of the information container from the first state to a second state; and
transmitting the information container with the second state (ICA2) to the second user device (138) via the network (120) by the first user device (136).

7. A method for communication management with organized information presentation for use in an electronic device (110), comprising:
receiving an information container with a first state (ICA1) from a first user device (136) via a network (120);
transmitting the information container with the first state (ICA1) to a second user device (138) via the network (120);
receiving the information container with a second state (ICA2) from the second user device (138) via the network (120), wherein the second user device (138) edits the content of the information container, thus changing the state of the information container from the first state to the second state; and
transmitting the information container with the second state (ICA2) to the first user device (136) via the network (120).

8. A method for communication management with organized information presentation for use in an electronic device (110), comprising:
receiving an information container with a first state (ICA1) from a first user device (136) via a network (120);
transmitting the information container with the first state (ICA1) to a second user device (138) via the network (120);
receiving the information container with a second state (ICA2) from the first user device (136) via the network (120), wherein the first user device (136) edits the content of the information container, thus changing the state of the information container from the first state to the second state; and
transmitting the information container with the second state (ICA2) to the second user device (138) via the network (120).

9. A system (100) for communication management with organized information presentation for use in an electronic device (200), comprising:
a network connecting unit (210); and
a processing unit (230) receiving an information container with a first state (ICA1) from a first user device (136) via the network connecting unit (210) and a network (120), transmitting the information container with the first state (ICA1) to a second user device (138) via the network connecting unit (210) and the network (120), receiving the information container with a second state (ICA2) from the second user device (138) via the network connecting unit (210) and the network (120), wherein the second user device (138) edits the content of the information container, thus changing the state of the information container from the first state to the second state, and transmitting the information container with the second state (ICA2) to the first user device (136) via the network connecting unit (210) and the network (120).

10. A system (100) for communication management with organized information presentation for use in an electronic device (200), comprising:
a network connecting unit (210); and
a processing unit (230) receiving an information container with a first state (ICA1) from a first user device (136) via the network connecting unit (210) and a network (120), transmitting the information container with the first state (ICA1) to a second user device (138) via the network connecting unit (210) and the network (120), receiving the information container with a second state (ICA2) from the first user device (136) via the network connecting unit (210) and the network (120), wherein the first user device (136) edits the content of the information container, thus changing the state of the information container from the first state to the second state, and transmitting the information container with the second state (ICA2) to the second user device (138) via the network connecting unit (210) and the network (120).
